# EUROPEAN PATENT SPECIFICATION

(11) **EP 4 435 530 B1**
(45) Date of publication and mention of the grant of the patent: **26.08.2026**
(21) Application number: 23192854.0
(22) Date of filing: 23.08.2023
(51) Int. Cl.: G03G 21/20, B41J 29/377

(54) **INFORMATION PROCESSING SYSTEM, INFORMATION PROCESSING PROGRAM, AND INFORMATION PROCESSING METHOD**
INFORMATIONSVERARBEITUNGSSYSTEM, INFORMATIONSVERARBEITUNGSPROGRAMM UND INFORMATIONSVERARBEITUNGSVERFAHREN
SYSTÈME DE TRAITEMENT D'INFORMATIONS, PROGRAMME DE TRAITEMENT D'INFORMATIONS ET PROCÉDÉ DE TRAITEMENT D'INFORMATIONS

(30) Priority: 23.03.2023 JP 2023047342
(43) Date of publication of application: 25.09.2024
(73) Proprietor: FUJIFILM Business Innovation Corp., Minato-ku Tokyo (JP)
(72) Inventor: AGEHAMA, Ryo, Yokohama-shi, Kanagawa (JP)
(74) Representative: Kurig, Thomas

(56) References cited:
- JP-A- 2020 185 682
- JP-A- H10 123 716
- US-A1- 2003 111 218
- US-A1- 2006 239 747
- US-A1- 2019 238 709

## Description

### BACKGROUND OF THE INVENTION

### (i) Field of the Invention

The technology disclosed in the present application relates to an information processing system, an information processing program, and an information processing method.

### (ii) Description of Related Art

JP2007-017906A discloses an image forming device including a cooling device having a plurality of fans and having a switching unit for switching a communication state between each of the plurality of fans and each of a plurality of cooled portions.
JP H10 123716 A discloses an image forming device in which a temperature sensor and a cooling fan are arranged in proper areas in a main body case of a photoreceptive, pressure-sensitive printer attached to a measuring panel in an automobile for riding. When the temperature of the atmosphere of the inside of the main body case is higher than a reference temperature, heat is expelled by rotating the cooling fan at a high speed, to prevent the characteristic of the sensitivity of the microcapsule paper from changing. In case it exceeds a warning temperature, an alarm lamp is caused to flicker, and also a printing operation is temporarily stopped.

### SUMMARY OF THE INVENTION

The present invention is provided in the appended claims. The following disclosure serves a better understanding of the present invention. The technology disclosed in the present application has an object to suppress a deviation of a device internal temperature of an image forming device from a reference device internal temperature, as compared with a case where the device internal temperature is controlled to be within the reference device internal temperature only by a fan provided in the image forming device.

According to a first aspect of the present disclosure, there is provided an information processing system including at least one processor, in which the processor is configured to acquire a device internal temperature in an image forming device, and operate an air conditioning device that air-conditions a room in which the image forming device is installed, in a case where the device internal temperature is outside a predetermined reference device internal temperature.

According to a second aspect of the present disclosure, there is provided the information processing system according to the first aspect, in which the processor may be configured to acquire an indoor temperature of the room, and operate the air conditioning device in a case where the device internal temperature is within the reference device internal temperature and the indoor temperature is outside a predetermined reference indoor temperature.

According to a third aspect of the present disclosure, there is provided the information processing system according to the second aspect, in which the processor may be configured to stop the air conditioning device in a case where the device internal temperature is within the reference device internal temperature and the indoor temperature is within the reference indoor temperature.

According to a fourth aspect of the present disclosure, there is provided the information processing system according to any one of the first aspect to the third aspect, in which the processor may be configured to acquire the device internal temperature from each of a plurality of device internal temperature sensors that detect a temperature in at least one image forming device, and operate the air conditioning device in a case where at least one of a plurality of device internal temperatures is outside the reference device internal temperature.

According to a fifth aspect of the present disclosure, there is provided the information processing system according to the fourth aspect, in which the reference device internal temperature may be predetermined for each of the plurality of device internal temperature sensors.

According to a sixth aspect of the present disclosure, there is provided the information processing system according to the fourth aspect or the fifth aspect, in which the temperature in the one image forming device may be detected by the plurality of device internal temperature sensors.

According to a seventh aspect of the present disclosure, there is provided the information processing system according to the fourth aspect or the fifth aspect, in which the temperatures in a plurality of image forming devices may be detected by the device internal temperature sensors, respectively.

According to an eighth aspect of the present disclosure, there is provided the information processing system according to any one of the first aspect to the seventh aspect, in which the processor may be configured to operate the air conditioning device in a cooling operation, in a case where the device internal temperature exceeds the reference device internal temperature.

According to a ninth aspect of the present disclosure, there is provided the information processing system according to any one of the first aspect to the eighth aspect, in which the processor may be configured to acquire the device internal temperature in a case where the image forming device is operating, and operate the air conditioning device while the image forming device is operating, in a case where the device internal temperature is outside the reference device internal temperature.

According to a tenth aspect of the present disclosure, there is provided an information processing program causing a computer to execute a process including acquiring a device internal temperature in an image forming device, and operating an air conditioning device that air-conditions a room in which the image forming device is installed, in a case where the device internal temperature is outside a predetermined reference device internal temperature.

According to an eleventh aspect of the present disclosure, there is provided an information processing method including acquiring a device internal temperature in an image forming device, and operating an air conditioning device that air-conditions a room in which the image forming device is installed, in a case where the device internal temperature is outside a predetermined reference device internal temperature.

With the first aspect, it is possible to suppress the deviation of the device internal temperature of the image forming device from the reference device internal temperature, as compared with a case where the device internal temperature is controlled to be within the reference device internal temperature only by the fan provided in the image forming device.

With the second aspect, it is possible to suppress the deviation of the device internal temperature of the image forming device from the reference device internal temperature, as compared with a case where the operation of the air conditioning device is controlled based only on the device internal temperature of the image forming device.

With the third aspect, energy saving can be achieved as compared with a case where the air conditioning device is operated constantly.

With the fourth aspect, it is possible to suppress the deviation of the device internal temperature of at least one image forming device from the reference device internal temperature, as compared with a case where the temperature in at least one image forming device is detected by one device internal temperature sensor.

With the fifth aspect, it is possible to suppress the deviation of the device internal temperature from the reference device internal temperature according to a device or a part in the image forming device in which the plurality of device internal temperature sensors detect the device internal temperature, as compared with a case where the reference device internal temperature of the plurality of device internal temperature sensors is uniform.

With the sixth aspect, it is possible to suppress the deviation of the device internal temperature from the reference device internal temperature over a wide range of the image forming device, as compared with a case where the temperature in one image forming device is detected by one device internal temperature sensor.

With the seventh aspect, it is possible to suppress the deviation of the device internal temperatures of the plurality of image forming devices from the reference device internal temperature, as compared with a case where the temperatures in the plurality of image forming devices are detected by one device internal temperature sensor.

With the eighth aspect, it is possible to suppress the device internal temperature of the image forming device from exceeding the reference device internal temperature, as compared with a case where the air conditioning device is operated only in a case where the device internal temperature of the image forming device is lower than the reference device internal temperature.

With the ninth aspect, in a case where the device internal temperature of the image forming device is outside the reference device internal temperature, an operating rate of the image forming device can be increased as compared with a case where the image forming device is stopped.

With the tenth aspect, it is possible to suppress the deviation of the device internal temperature of the image forming device from the reference device internal temperature, as compared with a case where the device internal temperature is controlled to be within the reference device internal temperature only by the fan provided in the image forming device.

With the eleventh aspect, it is possible to suppress the deviation of the device internal temperature of the image forming device from the reference device internal temperature, as compared with a case where the device internal temperature is controlled to be within the reference device internal temperature only by the fan provided in the image forming device.

### BRIEF DESCRIPTION OF THE DRAWINGS

Exemplary embodiment(s) of the present invention will be described in detail based on the following figures, wherein:
Fig. 1 is a diagram showing a schematic configuration of an image forming system according to the present exemplary embodiment;
Fig. 2 is a block diagram showing a hardware configuration of an image forming device shown in Fig. 1;
Fig. 3 is a block diagram showing a hardware configuration of an air conditioning device shown in Fig. 1;
Fig. 4 is a block diagram showing hardware configurations of a client terminal and a cloud server shown in Fig. 1;
Fig. 5 is a block diagram showing a function of the cloud server illustrated in Fig. 1; and
Fig. 6 is a flowchart showing a flow of device internal temperature control processing of the cloud server shown in Fig. 1.

### DETAILED DESCRIPTION OF THE INVENTION

Hereinafter, an exemplary embodiment of the technology disclosed in the present application will be described.

### (Image Forming System)

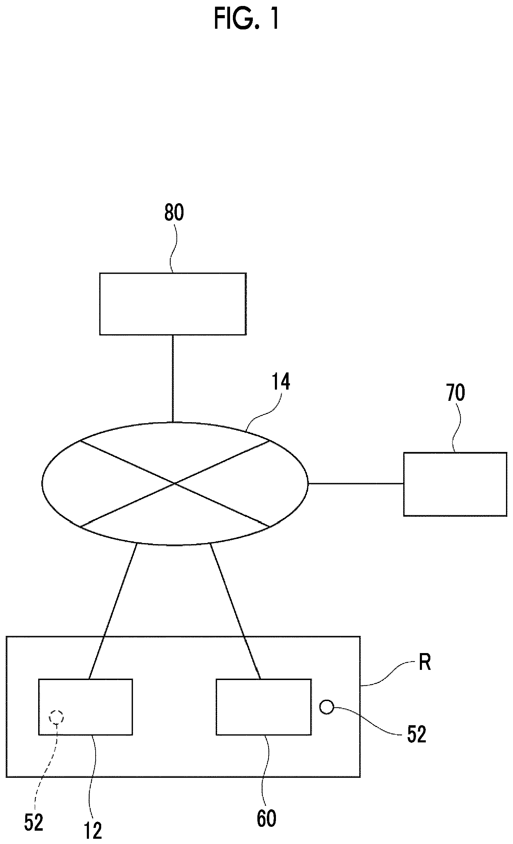

In Fig. 1, an image forming system 10 according to the present exemplary embodiment is shown. The image forming system 10 includes an image forming device 12, an air conditioning device 60, a client terminal 70, and a cloud server 80. The cloud server 80 is an example of an information processing system and an information processing apparatus. In addition, the client terminal 70 is an example of an information processing terminal.

The image forming device 12, the air conditioning device 60, the client terminal 70, and the cloud server 80 are each connected to a communication line 14 such as a Local Area Network (LAN), an intranet, a Wide Area Network (WAN), and the Internet. The image forming device 12, the air conditioning device 60, the client terminal 70, and the cloud server 80 are capable of transmitting and receiving various types of data to and from each other via the communication line 14.

The image forming device 12 is, as an example, a production machine that prints an image on a recording medium such as paper. The air conditioning device 60 is a device that air-conditions a room R in which the image forming device 12 is installed by a cooling operation or a heating operation.

In Fig. 1, the air conditioning device 60 is installed inside the room R. However, the air conditioning device 60 may be installed outside of the room R without being limited to the inside of the room R, and may be an air conditioning device that blows air-conditioned air to the room R via a duct (not shown) or the like.

The client terminal 70 is, for example, an information processing terminal operated by a user who uses the image forming device 12. The client terminal 70 is a personal computer, a laptop, a smartphone, or the like.

The cloud server 80 is a server functioning as a virtual device. The cloud server 80 controls an operation of the image forming device 12 according to a request from the client terminal 70. Specifically, the cloud server 80 acquires, for example, a printing request and image data to be printed from the client terminal 70, and generates a job (print job) based on the acquired printing request and image data. Then, the cloud server 80 transmits the generated job to the image forming device 12, and causes the image forming device 12 to execute printing according to the printing request.

In addition, the cloud server 80 monitors a temperature in the image forming device 12 (hereinafter, referred to as "device internal temperature"), and controls an operation of the air conditioning device 60 so that the device internal temperature does not deviate from a predetermined temperature (hereinafter, referred to as "reference device internal temperature").

Further, the cloud server 80 monitors a temperature of the room R in which the image forming device 12 is installed (hereinafter, referred to as "indoor temperature"), and controls the operation of the air conditioning device 60 so that the indoor temperature does not deviate from a predetermined temperature (hereinafter, referred to as "reference indoor temperature").

Although one image forming device 12, one air conditioning device 60, one client terminal 70, and one cloud server 80 are shown in Fig. 1, each of the image forming device 12, the air conditioning device 60, the client terminal 70, and the cloud server 80 may be plural.

### (Image Forming Device)

Next, a hardware configuration of the image forming device 12 will be described.

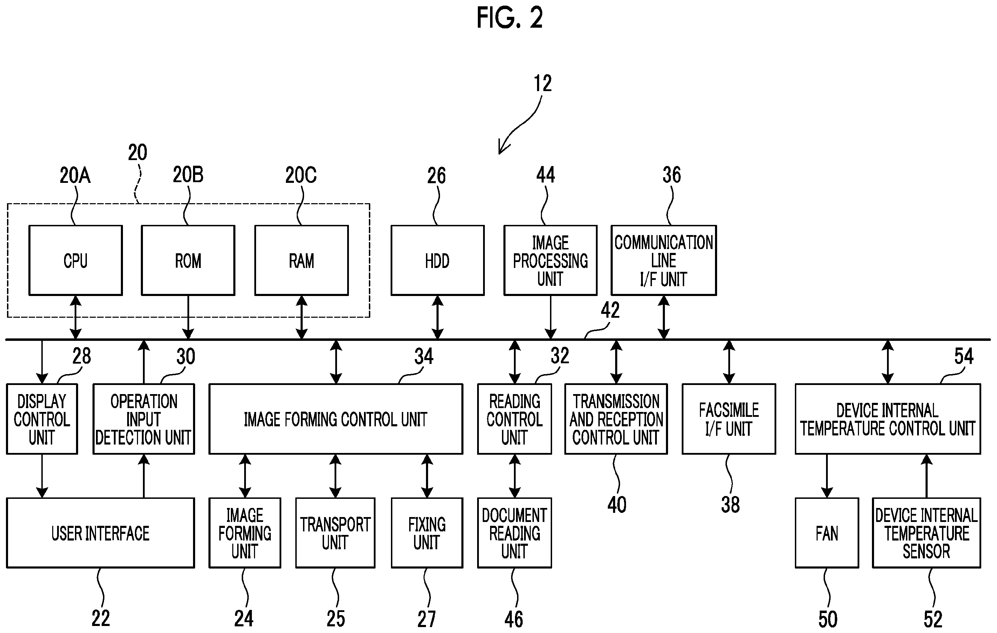

As shown in Fig. 2, the image forming device 12 includes a control unit 20 including a Central Processing Unit (CPU) 20A, a Read Only Memory (ROM) 20B, and a Random Access Memory (RAM) 20C.

The CPU 20A controls the overall operation of the image forming device 12. The RAM 20C is used as a work area or the like during execution of various information processing programs by the CPU 20A. The ROM 20B stores various information processing programs, various parameters, and the like in advance. The CPU 20A, the RAM 20C, and the ROM 20B are electrically connected to a system bus 42.

The image forming device 12 includes a Hard Disk Drive (HDD) 26 as a storage unit for storing various types of data, application programs, and the like. In addition, the image forming device 12 includes a display control unit 28 that is connected to a user interface 22 and controls the display of various operation screens and the like on a display of the user interface 22. Further, the image forming device 12 includes an operation input detection unit 30 that is connected to the user interface 22 and detects an operation instruction input via the user interface 22. The HDD 26, the display control unit 28, and the operation input detection unit 30 are electrically connected to the system bus 42.

The storage unit is not limited to the HDD 26, and may be a non-volatile storage unit such as a flash memory.

The image forming device 12 includes a reading control unit 32 that controls an optical image reading operation by a document reading unit 46 and a document feeding operation by a document transport unit. In addition, the image forming device 12 includes an image forming control unit 34 that controls image forming processing by the image forming unit 24, transporting a recording medium such as paper to the image forming unit 24 by a transport unit 25, and a fixing unit 27 that fixes the image formed in the image forming processing of the image forming unit 24 to the recording medium.

The image forming device 12 includes a communication line interface (communication line I/F) unit 36 that is connected to the communication line 14 and transmits and receives communication data to and from other devices connected to the communication line 14, and an image processing unit 44 that performs various kinds of image processing.

The image forming device 12 includes a facsimile interface (facsimile I/F) unit 38 that is connected to a telephone line (not shown) and transmits and receives facsimile data to and from the facsimile device that is connected to the telephone line. In addition, the image forming device 12 includes a transmission and reception control unit 40 that controls transmission and reception of facsimile data via the facsimile interface unit 38. The reading control unit 32, the image forming control unit 34, the communication line interface unit 36, the facsimile interface unit 38, the transmission and reception control unit 40, and the image processing unit 44 are electrically connected to the system bus 42.

The image forming device 12 includes a fan 50 that cools the inside of the image forming device 12. The fan 50 cools, for example, a device or a part that requires temperature control in the image forming device 12. At least one fan 50 is provided in the image forming device 12.

The image forming device 12 includes a device internal temperature sensor 52 that detects a device internal temperature. For example, in the image forming device 12, the device internal temperature sensor 52 detects a temperature (a device internal temperature) of a device or a part that requires temperature control, or a temperature of the surroundings of the devices. At least one device internal temperature sensor 52 is provided in the image forming device 12.

The image forming device 12 includes a device internal temperature control unit 54. The device internal temperature control unit 54 controls the operation of the fan 50 that cools the inside of the image forming device 12, based on the device internal temperature detected by the device internal temperature sensor 52. The device internal temperature sensor 52 and the device internal temperature control unit 54 are electrically connected to the system bus 42.

With the above configuration, the image forming device 12 executes an access to the RAM 20C, the ROM 20B, and the HDD 26 by the CPU 20A, respectively. In addition, the image forming device 12 performs control of the display of information such as an operation screen and various messages on the display of the user interface 22 via the display control unit 28, by the CPU 20A.

In addition, the image forming device 12 performs control of the operations of the document reading unit 46 and the document transport unit via the reading control unit 32, by the CPU 20A. In addition, the image forming device 12 performs control of the operations of the image forming unit 24, the transport unit 25, and the fixing unit 27 via the image forming control unit 34 and control of the transmission and reception of communication data via the communication line interface unit 36, by the CPU 20A, respectively.

In addition, the image forming device 12 performs control of the transmission and reception of facsimile data via the facsimile interface unit 38 by the transmission and reception control unit 40, by the CPU 20A. Further, the image forming device 12 grasps the operation contents in the user interface 22 based on the operation information detected by the operation input detection unit 30, and performs various controls based on the operation contents, by the CPU 20A.

In addition, the image forming device 12 performs control of the fan 50 by the CPU 20A based on the device internal temperature detected by the device internal temperature sensor 52. Specifically, the CPU 20A operates the fan 50 in a case where the device internal temperature detected by the device internal temperature sensor 52 is outside a predetermined reference temperature. Accordingly, the inside of the image forming device 12 is cooled.

On the other hand, the CPU 20A stops the fan 50 in a case where the device internal temperature detected by the device internal temperature sensor 52 is within the reference temperature. In addition, the image forming device 12 transmits the device internal temperature detected by the device internal temperature sensor 52 to the cloud server 80 via the communication line 14 by the CPU 20A.

Further, the image forming device 12 transmits the state information representing a state of the image forming device 12 to the cloud server 80 via the communication line 14 by the CPU 20A. The state information of the image forming device 12 includes, for example, operating (operating state) representing a preparation state or an execution state of the image forming device 12, and stopping (stopped state) representing a stopped state of the image forming device 12.

### (Air Conditioning Device)

Next, a hardware configuration of the air conditioning device 60 will be described.

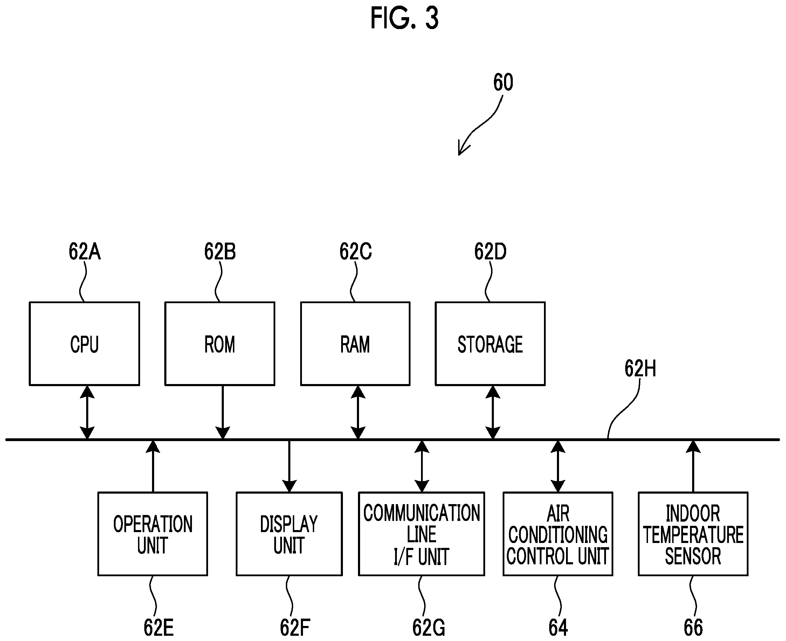

As shown in Fig. 3, the air conditioning device 60 includes a CPU 62A, a ROM 62B, a RAM 62C, a storage 62D, an operation unit 62E, a display unit 62F, a communication line interface (I/F) unit 62G, an air conditioning control unit 64, and an indoor temperature sensor 66.

The CPU 62A controls the overall operation of the air conditioning device 60. The ROM 62B stores various information processing programs that perform various controls, various parameters, and the like in advance. The RAM 62C is used as a work area or the like during execution of various information processing programs by the CPU 62A.

The storage 62D stores various types of data, application programs, and the like. For the storage 62D, for example, a non-volatile storage unit such as an HDD or a flash memory is applied. The operation unit 62E is used for input of various types of information.

The display unit 62F is used for display of various types of information. The communication line interface unit 62G is connected to the communication line 14, and transmits and receives various types of data to and from other devices connected to the communication line 14.

The air conditioning control unit 64 controls, for example, an operation of an air-conditioning air generation unit that generates air-conditioned air for cooling or heating, and an operation of a blowing unit that blows the generated air-conditioned air. The indoor temperature sensor 66 detects the indoor temperature of the room R. At least one indoor temperature sensor 66 is provided in the room R. The respective units of the air conditioning device 60 are electrically connected to each other by a system bus 62H.

In the present exemplary embodiment, the air conditioning device 60 includes the indoor temperature sensor 66. However, the indoor temperature sensor 66 may be provided in the room R separately from the air conditioning device 60. In this case, the indoor temperature of the room R detected by the indoor temperature sensor 66 is, for example, transmitted to the cloud server 80 from an information processing apparatus different from the air conditioning device 60 via the communication line 14.

With the above configuration, the air conditioning device 60 performs, by the CPU 62A, accesses to the ROM 62B, the RAM 62C, and the storage 62D, acquisition of various kinds of data via the operation unit 62E, and display of various types of information on the display unit 62F, respectively. In addition, the air conditioning device 60 performs control of transmission and reception of communication data via the communication line interface unit 62G by the CPU 62A.

In addition, the air conditioning device 60 performs control of the operations of the air-conditioning air generation unit and the blowing unit via the air conditioning control unit 64 by the CPU 62A. In addition, the air conditioning device 60 transmits the indoor temperature detected by the indoor temperature sensor 66 to the cloud server 80, which will be described later, via the communication line 14 by the CPU 62A.

### (Client Terminal and Cloud Server)

Next, hardware configurations of the client terminal 70 and the cloud server 80 will be described.

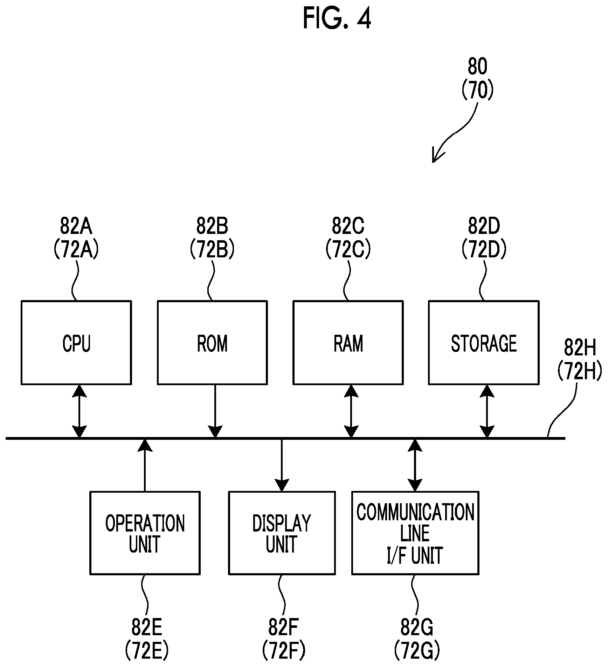

As shown in Fig. 4, the client terminal 70 and the cloud server 80 include CPUs 72A and 82A, ROMs 72B and 82B, RAMs 72C and 82C, storages 72D and 82D, operation units 72E and 82E, display units 72F and 82F, and communication line interface (I/F) units 72G and 82G, respectively. The respective units of the client terminal 70 and the cloud server 80 are electrically connected to each other by system buses 72H and 82H. A CPU 82A of the cloud server 80 is an example of the processor.

Here, the client terminal 70 and the cloud server 80 are configured by general computers. Therefore, in the following, the hardware configuration of the cloud server 80 is described, and the description of the hardware configuration of the client terminal 70 is omitted.

The CPU 82A controls the overall operation of the cloud server 80. The ROM 82B stores various information processing programs that perform various controls, various parameters, and the like in advance. The RAM 82C is used as a work area or the like during execution of various information processing programs by the CPU 82A.

The storage 82D stores various types of data, application programs, and the like. For the storage 82D, for example, a non-volatile storage unit such as an HDD or a flash memory is applied. The operation unit 82E is used for input of various types of information.

The display unit 82F is used for display of various types of information. The communication line interface unit 82G is connected to the communication line 14, and transmits and receives various types of data to and from other devices connected to the communication line 14.

With the above configuration, the cloud server 80 performs, by the CPU 82A, accesses to the ROM 82B, the RAM 82C, and the storage 82D, acquisition of various kinds of data via the operation unit 82E, and display of various types of information on the display unit 82F, respectively. In addition, the cloud server 80 performs control of transmission and reception of communication data via the communication line interface unit 82G by the CPU 82A.

### (Function of Cloud Server)

Next, the device internal temperature control function in which the cloud server 80 controls the device internal temperature of the image forming device 12 will be described.

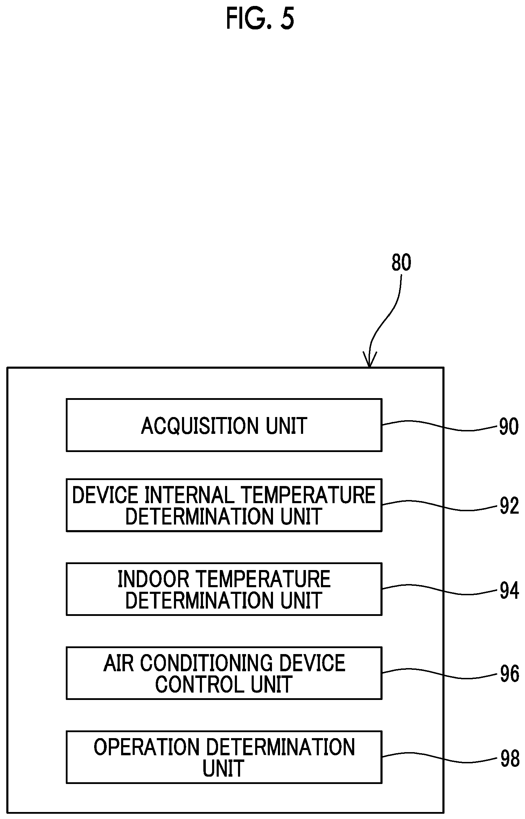

In executing the above information processing program, the cloud server 80 implements various functions by using the above hardware resources. Specifically, as shown in Fig. 5, the cloud server 80 functionally has an acquisition unit 90, a device internal temperature determination unit 92, an indoor temperature determination unit 94, an air conditioning device control unit 96, and an operation determination unit 98. The acquisition unit 90, the device internal temperature determination unit 92, the indoor temperature determination unit 94, the air conditioning device control unit 96, and the operation determination unit 98 are implemented by reading out and executing the information processing program stored in the storage 82D, by the CPU 82A.

### (Acquisition Unit)

The acquisition unit 90 acquires various types of information from the image forming device 12 and the air conditioning device 60. Specifically, the acquisition unit 90 acquires the device internal temperature detected by the device internal temperature sensor 52 and the state information of the image forming device 12 from the image forming device 12. In addition, the acquisition unit 90 acquires the indoor temperature of the room R detected by the indoor temperature sensor 66 from the air conditioning device 60.

The acquisition unit 90 may acquire, for example, the device internal temperature of the image forming device 12 and the state information of the image forming device 12 from an inspection device that inspects the image forming device 12 or a management device that manages the image forming device 12, without being limited to the image forming device 12.

### (Device Internal Temperature Determination Unit)

The device internal temperature determination unit 92 determines whether or not the device internal temperature in the image forming device 12, which is detected by the device internal temperature sensor 52, is outside the reference device internal temperature. The reference device internal temperature is, for example, set based on a temperature (recommended temperature) recommended from the viewpoint of image quality printed on the recording medium. The reference device internal temperature is set to have a predetermined range (temperature range), for example, 10°C to 30°C.

In the image forming device 12, for example, the recommended temperature differs between the image forming unit 24 and the fixing unit 27. Therefore, the reference device internal temperature is, for example, appropriately set according to a device or a part in the image forming device 12 in which the device internal temperature sensor 52 detects the device internal temperature.

### (Indoor Temperature Determination Unit)

The indoor temperature determination unit 94 determines whether or not the indoor temperature of the room R, which is detected by the indoor temperature sensor 66, is outside the reference indoor temperature. The reference indoor temperature is set, for example, based on a recommended ambient temperature (recommended ambient temperature) as the ambient temperature in which the image forming device 12 is installed. In addition, the reference indoor temperature is set to have a predetermined range (temperature range), for example, 15°C to 25°C.

As an example, a lower limit value of the reference indoor temperature is set higher than a lower limit value of the reference device internal temperature. In addition, as an example, an upper limit value of the reference indoor temperature is set lower than an upper limit value of the reference device internal temperature.

### (Air Conditioning Device Control Unit)

The air conditioning device control unit 96 controls the operation of the air conditioning device 60. Specifically, the air conditioning device control unit 96 operates the air conditioning device 60 in a cooling operation or a heating operation. In addition, the air conditioning device control unit 96 stops the air conditioning device 60.

### (Operation Determination Unit)

The operation determination unit 98 determines whether or not the image forming device 12 is operating, based on the state information of the image forming device 12. The state information of the image forming device 12 includes, as described above, operating (operating state) representing a preparation state or an execution state of the image forming device 12, and stopping (stopped state) representing a stopped state of the image forming device 12.

### (Device Internal Temperature Control Processing)

Next, an example of the device internal temperature control processing in which the cloud server 80 controls the device internal temperature of the image forming device 12 will be described.

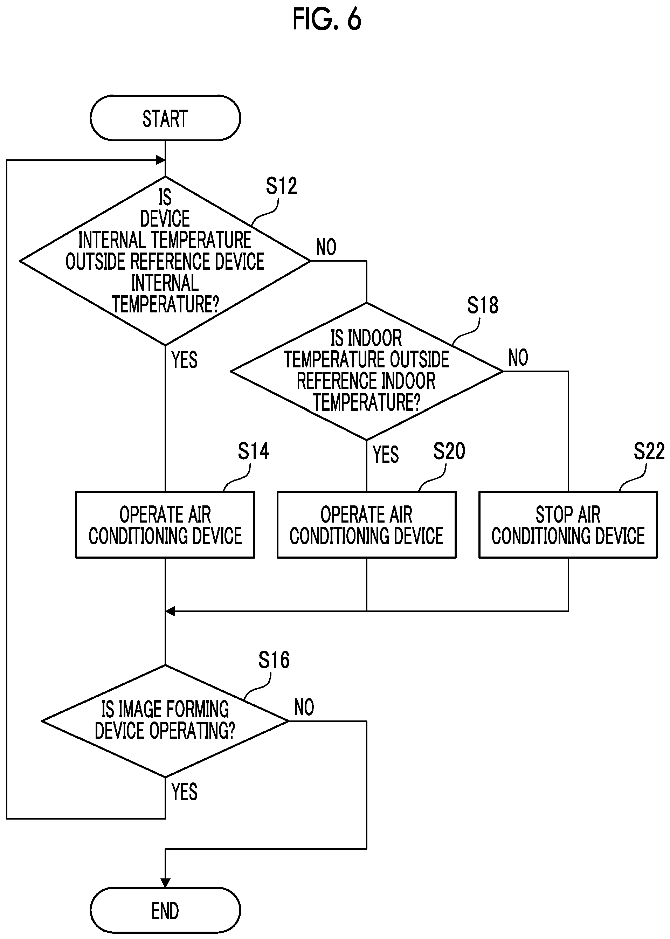

For example, in a case where the cloud server 80 acquires the printing request from the client terminal 70, the device internal temperature control processing shown in Fig. 6 is executed on the cloud server 80. The device internal temperature control processing is an example of the device internal temperature control method.

First, in Step S12, the CPU 82A acquires a device internal temperature of the image forming device 12, which is detected by the device internal temperature sensor 52, from the image forming device 12, and determines whether or not the acquired device internal temperature is outside the reference device internal temperature. Then, in a case where the CPU 82A determines that the device internal temperature of the image forming device 12 is outside the reference device internal temperature, the CPU 82A proceeds to Step S14.

Next, in Step S14, the CPU 82A operates the air conditioning device 60 and air-conditions the room R in which the image forming device 12 is installed. Specifically, in a case where the device internal temperature of the image forming device 12 exceeds the reference device internal temperature, the CPU 82A operates the air conditioning device 60 in the cooling operation. Accordingly, the room R in which the image forming device 12 is installed is cooled.

On the other hand, in a case where the device internal temperature of the image forming device 12 is lower than the reference device internal temperature, the CPU 82A operates the air conditioning device 60 in the heating operation. Accordingly, the room R in which the image forming device 12 is installed is heated. After that, the CPU 82A proceeds to Step S16.

Next, in Step S16, the CPU 82A acquires the state information of the image forming device 12 from the image forming device 12, and determines whether or not the image forming device 12 is operating based on the acquired state information. Then, in a case where the CPU 82A determines that the image forming device 12 is operating, the CPU 82A returns to Step S12. On the other hand, in a case where the CPU 82A determines that the image forming device 12 is stopped, the CPU 82A ends the processing.

Next, in Step S12, in a case where the CPU 82A determines that the device internal temperature of the image forming device 12 is within the reference device internal temperature, the CPU 82A proceeds to Step S18.

Next, in Step S18, the CPU 82A acquires the indoor temperature of the room R, which is detected by the indoor temperature sensor 66, from the air conditioning device 60, and determines whether or not the acquired indoor temperature is outside the reference indoor temperature. Then, in a case where the CPU 82A determines that the indoor temperature of the room R is outside the reference indoor temperature, the CPU 82A proceeds to Step S20.

Next, in Step S20, the CPU 82A operates the air conditioning device 60 and air-conditions the room R in which the image forming device 12 is installed. Specifically, in a case where the indoor temperature of the room R exceeds the reference indoor temperature, the CPU 82A operates the air conditioning device 60 in the cooling operation. Accordingly, the room R in which the image forming device 12 is installed is cooled.

On the other hand, in a case where the indoor temperature of the room R is lower than the reference indoor temperature, the CPU 82A operates the air conditioning device 60 in the heating operation. Accordingly, the room R in which the image forming device 12 is installed is heated. After that, the CPU 82A proceeds to Step S16 described above.

Next, in Step S18, in a case where the CPU 82A determines that the indoor temperature of the room R is within the reference indoor temperature, the CPU 82A proceeds to Step S22.

Next, in Step S22, the CPU 82A stops the air conditioning device 60.

### (Action and Effect)

Next, the action and the effect of the present exemplary embodiment will be described.

As described above, in the present exemplary embodiment, in a case where the device internal temperature of the image forming device 12 is outside the reference device internal temperature, the air conditioning device 60 is operated and the room R in which the image forming device 12 is installed is air-conditioned. Accordingly, in the present exemplary embodiment, it is possible to suppress the deviation of the device internal temperature of the image forming device 12 from the reference device internal temperature, as compared with a case where the device internal temperature is controlled to be within the reference device internal temperature only by the fan 50 provided in the image forming device 12. Therefore, it is possible to suppress the device internal temperature of the image forming device 12 from becoming a temperature at which the image forming device 12 cannot operate (operation stop temperature).

In addition, in the present exemplary embodiment, in a case where the device internal temperature of the image forming device 12 exceeds the reference device internal temperature, the air conditioning device 60 is operated in the cooling operation and the room R in which the image forming device 12 is installed is cooled. Accordingly, in the present exemplary embodiment, it is possible to suppress the device internal temperature of the image forming device 12 from exceeding the reference device internal temperature, as compared with a case where the air conditioning device 60 is operated only in a case where the device internal temperature of the image forming device 12 is lower than the reference device internal temperature.

Further, in the present exemplary embodiment, in a case where the device internal temperature of the image forming device 12 is lower than the reference device internal temperature, the air conditioning device 60 is operated in the heating operation and the room R in which the image forming device 12 is installed is heated. Accordingly, in the present exemplary embodiment, it is possible to suppress the device internal temperature of the image forming device 12 from falling below the reference device internal temperature, as compared with a case where the air conditioning device 60 is operated only in a case where the device internal temperature of the image forming device 12 exceeds the reference device internal temperature.

In this way, in the present exemplary embodiment, it is possible to suppress the device internal temperature of the image forming device 12 from deviating from the reference device internal temperature. Therefore, in the present exemplary embodiment, the image forming device 12 can suppress quality deterioration of the image printed on the recording medium.

In addition, in the present exemplary embodiment, in a case where the device internal temperature of the image forming device 12 is outside the reference device internal temperature, the air conditioning device 60 is operated while the image forming device 12 is operating. Accordingly, in the present exemplary embodiment, in a case where the device internal temperature of the image forming device 12 is outside the reference device internal temperature, an operating rate of the image forming device 12 may be increased as compared with a case where the image forming device 12 is stopped.

In addition, in the present exemplary embodiment, in a case where the indoor temperature of the room R in which the image forming device 12 is installed is outside the reference indoor temperature, the air conditioning device 60 is operated and the room R is air-conditioned. Accordingly, in the present exemplary embodiment, it is possible to suppress the deviation of the device internal temperature of the image forming device 12 from the reference device internal temperature, as compared with a case where the operation of the air conditioning device 60 is controlled based only on the device internal temperature of the image forming device 12.

In addition, in the present exemplary embodiment, in a case where the indoor temperature of the room R exceeds the reference indoor temperature, the air conditioning device 60 is operated in the cooling operation and the room R in which the image forming device 12 is installed is cooled. Accordingly, in the present exemplary embodiment, it is possible to suppress the indoor temperature of the room R from exceeding the reference indoor temperature, as compared with a case where the air conditioning device 60 is operated only in a case where the indoor temperature of the room R is lower than the reference indoor temperature.

Further, in the present exemplary embodiment, in a case where the indoor temperature of the room R is lower than the reference indoor temperature, the air conditioning device 60 is operated in the heating operation and the room R in which the image forming device 12 is installed is heated. Accordingly, in the present exemplary embodiment, it is possible to suppress the indoor temperature of the room R from falling below the reference indoor temperature, as compared with a case where the air conditioning device 60 is operated only in a case where the indoor temperature of the room R exceeds the reference indoor temperature.

Further, in the present exemplary embodiment, in a case where the indoor temperature of the room R in which the image forming device 12 is installed is within the reference indoor temperature, the air conditioning device 60 is stopped. Accordingly, in the present exemplary embodiment, energy saving may be achieved as compared with a case where the air conditioning device 60 is operated constantly.

### (Modification Example)

Next, the modification example of the above exemplary embodiment will be described.

In the above exemplary embodiment, one device internal temperature sensor 52 is provided in the image forming device 12. However, in the image forming device 12, a plurality of device internal temperature sensors 52 may be provided. In addition, in the above exemplary embodiment, one image forming device 12 is installed in the room R to be air-conditioned by the air conditioning device 60. However, in the room R, a plurality of image forming devices 12 may be installed. That is, in the above exemplary embodiment, at least one device internal temperature sensor 52 can be provided in at least one image forming device 12.

Here, in a case where the plurality of device internal temperature sensors 52 are provided in one image forming device 12, the cloud server 80 performs, for example, processing of operating the air conditioning device 60, in a case where at least one of a plurality of device internal temperatures detected by the plurality of device internal temperature sensors 52 respectively deviates from the reference device internal temperature. Accordingly, in the present exemplary embodiment, it is possible to suppress the deviation of the device internal temperature from the reference device internal temperature over a wide range of the image forming device 12, as compared with a case where the device internal temperature of one image forming device 12 is detected by one device internal temperature sensor 52.

In addition, in a case where the plurality of image forming devices 12 are installed in the room R, the cloud server 80 performs, for example, processing of operating the air conditioning device 60, in a case where at least one of the plurality of device internal temperatures detected by the device internal temperature sensors 52 respectively provided in the plurality of image forming devices 12 deviates from the reference device internal temperature. Accordingly, in the present exemplary embodiment, it is possible to suppress the deviation of the device internal temperatures of the plurality of image forming devices 12 from the reference device internal temperature, as compared with a case where the device internal temperatures of the plurality of image forming devices 12 are detected by one device internal temperature sensor 52.

In addition, in a case where the plurality of device internal temperature sensors 52 are provided in at least one image forming device 12, the reference device internal temperature may be set for each of the device internal temperature sensors 52. Accordingly, in the present exemplary embodiment, it is possible to suppress the deviation of the device internal temperature from the reference device internal temperature according to the device or the part in the image forming device 12 in which the plurality of device internal temperature sensors 52 detect the device internal temperature, as compared with a case where the reference device internal temperature of the plurality of device internal temperature sensors 52 is uniform.

In addition, in the above exemplary embodiment, one indoor temperature sensor 66 is provided in the room R in which the image forming device 12 is installed. However, in the room R, a plurality of indoor temperature sensors 66 may be provided.

Here, in a case where the plurality of indoor temperature sensors 66 are provided in the room R, the cloud server 80 performs, for example, processing of operating the air conditioning device 60, in a case where at least one of a plurality of indoor temperatures detected by the plurality of indoor temperature sensors 66 respectively deviates from the reference indoor temperature. Accordingly, in the present exemplary embodiment, it is possible to suppress the deviation of the indoor temperature from the reference indoor temperature over a wide range of the room R, as compared with a case where the indoor temperature of the room R is detected by one indoor temperature sensor 66.

In addition, in a case where the plurality of indoor temperature sensors 66 in the room R, a reference indoor temperature may be set for each of the indoor temperature sensors 66. Accordingly, in the present exemplary embodiment, it is possible to suppress the deviation of the indoor temperature from the reference indoor temperature according to a region of the room R in which the plurality of indoor temperature sensors 66 detect the indoor temperature, as compared with a case where the reference indoor temperature of the plurality of indoor temperature sensors 66 is uniform.

In addition, in the above exemplary embodiment, the operation of the fan 50 of the image forming device 12 is controlled by the image forming device 12. However, the operation of the fan 50 of the image forming device 12 may be controlled by the cloud server 80.

Specifically, in the above exemplary embodiment, in a case where the device internal temperature detected by the device internal temperature sensor 52 exceeds the reference device internal temperature, the fan 50 is operated by the device internal temperature control unit 54 of the image forming device 12. However, in a case where the device internal temperature exceeds the reference device internal temperature and the indoor temperature of the room R in which the image forming device 12 is installed exceeds the reference indoor temperature, even though the fan 50 is operated, the image forming device 12 may not be cooled, or the cooling efficiency may be lowered.

Therefore, for example, in a case where the device internal temperature detected by the device internal temperature sensor 52 exceeds the reference device internal temperature and the indoor temperature detected by the indoor temperature sensor 66 exceeds the reference indoor temperature, the cloud server 80 operates the air conditioning device 60 in the cooling operation without operating the fan 50, and the room R is cooled. Then, in a case where the indoor temperature detected by the indoor temperature sensor 66 falls within the reference indoor temperature, the cloud server 80 operates the fan 50 to cool the image forming device 12. Accordingly, the image forming device 12 can be efficiently cooled.

In addition, in the above exemplary embodiment, in a case where the device internal temperature of the image forming device 12 exceeds the reference device internal temperature, and a case where the device internal temperature is lower than the reference device internal temperature, the cloud server 80 operates the air conditioning device 60. However, the cloud server 80 may, for example, operate the air conditioning device 60 (cooling operation) only in a case where the device internal temperature of the image forming device 12 exceeds the reference device internal temperature, or may operate the air conditioning device 60 (heating operation) only in a case where the device internal temperature of the image forming device 12 is lower than the reference device internal temperature.

Similarly, in the above exemplary embodiment, in a case where the indoor temperature of the room R exceeds the reference indoor temperature and a case where the indoor temperature of the room R is lower than the reference indoor temperature, the cloud server 80 operates the air conditioning device 60. However, the cloud server 80 operates the air conditioning device 60 (cooling operation) only in a case where the device internal temperature of the image forming device 12 exceeds the reference device internal temperature and the indoor temperature of the room R exceeds the reference indoor temperature. In addition, the cloud server 80 operates the air conditioning device 60 (heating operation) only in a case where the device internal temperature of the image forming device 12 is lower than the reference device internal temperature and the indoor temperature of the room R is lower than the reference indoor temperature.

In addition, in the above exemplary embodiment, the cloud server 80 controls the operation of the air conditioning device 60 based on the indoor temperature of the room R. However, the cloud server 80 may be capable of controlling the operation of the air conditioning device 60 based on at least the device internal temperature of the image forming device 12, and does not necessarily control the operation of the air conditioning device 60 based on the indoor temperature of the room R.

In addition, the term "system" in the present exemplary embodiment includes both a system configured by a plurality of devices and a system configured by a single device. That is, in the present exemplary embodiment, the function of the cloud server 80 may be implemented by the image forming device 12, the air conditioning device 60, and the cloud server 80, or may be implemented by at least one of the image forming device 12, the air conditioning device 60, or the cloud server 80.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, the processing performed in each unit of the image forming system 10 according to the above exemplary embodiment may be processing performed by the software, processing performed by the hardware, or processing in which both the software and the hardware are combined. In addition, the processing performed in each unit of the image forming system 10 may be stored in a storage medium as a program and distributed.

Although one exemplary embodiment of the technology disclosed in the present application has been described above, the technology disclosed in the present application is not limited to the above exemplary embodiment. In addition, the above-described exemplary embodiment and various modification examples may be appropriately combined and used, and it is needless to say that various exemplary embodiments can be implemented without departing from the gist of the technology disclosed in the present application.

With the information processing system according to appended claim 1, it is possible to suppress the deviation of the device internal temperature of the image forming device from the reference device internal temperature, as compared with a case where the device internal temperature is controlled to be within the reference device internal temperature only by the fan provided in the image forming device.

With the information processing system according to appended claim 1, it is possible to suppress the deviation of the device internal temperature of the image forming device from the reference device internal temperature, as compared with a case where the operation of the air conditioning device is controlled based only on the device internal temperature of the image forming device.

With the information processing system according to appended claim 2, energy saving can be achieved as compared with a case where the air conditioning device is operated constantly.

With the information processing system according to appended claim 3, it is possible to suppress the deviation of the device internal temperature of at least one image forming device from the reference device internal temperature, as compared with a case where the temperature in at least one image forming device is detected by one device internal temperature sensor.

With the information processing system according to appended claim 4, it is possible to suppress the deviation of the device internal temperature from the reference device internal temperature according to the device or the part in the image forming device in which the plurality of device internal temperature sensors detect the device internal temperature, as compared with a case where the reference device internal temperature of the plurality of device internal temperature sensors is uniform.

With the information processing system according to appended claim 5, it is possible to suppress the deviation of the device internal temperature from the reference device internal temperature over a wide range of the image forming device, as compared with a case where the temperature in one image forming device is detected by one device internal temperature sensor.

With the information processing system according to appended claim 6, it is possible to suppress the deviation of the device internal temperatures of the plurality of image forming devices from the reference device internal temperature, as compared with a case where the temperatures of the plurality of image forming devices are detected by one device internal temperature sensor.

With the information processing system according to appended claim 7, it is possible to suppress the device internal temperature of the image forming device from exceeding the reference device internal temperature, as compared with a case where the air conditioning device is operated only in a case where the device internal temperature of the image forming device is lower than the reference device internal temperature.

With the information processing system according to appended claim 8, in a case where the device internal temperature of the image forming device is outside the reference device internal temperature, an operating rate of the image forming device can be increased as compared with a case where the image forming device is stopped.

With the information processing program according to appended claim 9, it is possible to suppress the deviation of the device internal temperature of the image forming device from the reference device internal temperature, as compared with a case where the device internal temperature is controlled to be within the reference device internal temperature only by the fan provided in the image forming device.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

12: image forming device
52: device internal temperature sensor
60: air conditioning device
66: indoor temperature sensor
80: cloud server (information processing system)
82A: CPU (processor)
R: room

## Claims

1. An information processing system (80) comprising:
at least one processor (82A),
wherein the processor (82A) is configured to:
acquire a device internal temperature in an image forming device (12);
operate an air conditioning device (60) that air-conditions a room (R) in which the image forming device (12) is installed, in a case where the device internal temperature is outside a predetermined reference device internal temperature, wherein the information processing system (80) is **characterized in that** the processor (82A) is further configured to:
acquire an indoor temperature of the room (R); and
operate the air conditioning device (60) in a case where the device internal temperature is within the reference device internal temperature and the indoor temperature is outside a predetermined reference indoor temperature, wherein
a range of the reference indoor temperature is within a range of the reference device internal temperature.

2. The information processing system (80) according to claim 1, wherein the processor is configured to:
stop the air conditioning device in a case where the device internal temperature is within the reference device internal temperature and the indoor temperature is within the reference indoor temperature.

3. The information processing system (80) according to any one of claims 1 to 2, wherein the processor is configured to:
acquire the device internal temperature from each of a plurality of device internal temperature sensors that detect a temperature in at least one image forming device (12); and
operate the air conditioning device in a case where at least one of a plurality of device internal temperatures is outside the reference device internal temperature.

4. The information processing system (80) according to claim 3,
wherein the reference device internal temperature is predetermined for each of the plurality of device internal temperature sensors.

5. The information processing system (80) according to claim 3 or 4,
wherein the temperature in the one image forming device (12) is detected by the plurality of device internal temperature sensors.

6. The information processing system (80) according to claim 3 or 4,
wherein the temperatures in a plurality of image forming devices (12) are detected by the device internal temperature sensors, respectively.

7. The information processing system according to any one of claims 1 to 6, wherein the processor is configured to:
operate the air conditioning device in a cooling operation, in a case where the device internal temperature exceeds the reference device internal temperature.

8. The information processing system (80) according to any one of claims 1 to 7, wherein the processor is configured to:
acquire the device internal temperature in a case where the image forming device (12) is operating; and
operate the air conditioning device while the image forming device (12) is operating, in a case where the device internal temperature is outside the reference device internal temperature.

9. An information processing program, which, when executed by a processor (82A) in the information processing system (80) according to claim 1, causes the processor (82A) to execute a process comprising:
acquiring a device internal temperature in an image forming device (12); and
operating an air conditioning device (60) that air-conditions a room (R) in which the image forming device (12) is installed, in a case where the device internal temperature is outside a predetermined reference device internal temperature; **characterized in that** the processor (82A) is further caused to execute:
acquiring an indoor temperature of the room (R); and
operating the air conditioning device (60) in a case where the device internal temperature is within the reference device internal temperature and the indoor temperature is outside a predetermined reference indoor temperature, wherein
a range of the reference indoor temperature is within a range of the reference device internal temperature.

10. An information processing method comprising:
acquiring a device internal temperature in an image forming device (12); and
operating an air conditioning device (60) that air-conditions a room (R) in which the image forming device (12) is installed, in a case where the device internal temperature is outside a predetermined reference device internal temperature; **characterized in that** the method further comprises:
acquiring an indoor temperature of the room (R); and
operating the air conditioning device (60) in a case where the device internal temperature is within the reference device internal temperature and the indoor temperature is outside a predetermined reference indoor temperature, wherein
a range of the reference indoor temperature is within a range of the reference device internal temperature.

## Patentansprüche

1. Informationsverarbeitungssystem (80), umfassend:
mindestens einen Prozessor (82A),
wobei der Prozessor (82A) so konfiguriert ist, dass er:
eine Vorrichtungsinnentemperatur in einer Bilderzeugungsvorrichtung (12) erfasst;
eine Klimatisierungsvorrichtung (60), die einen Raum (R), in dem die Bilderzeugungsvorrichtung (12) installiert ist, klimatisiert, in einem Fall, in dem die Vorrichtungsinnentemperatur außerhalb einer vorbestimmten Referenzvorrichtungsinnentemperatur liegt, betreibt, wobei das Informationsverarbeitungssystem (80) **dadurch gekennzeichnet ist, dass** der Prozessor (82A) ferner so konfiguriert ist, dass er:
eine Innenraumtemperatur des Raums (R) erfasst; und
die Klimatisierungsvorrichtung (60) in einem Fall, in dem die Vorrichtungsinnentemperatur innerhalb der Referenzvorrichtungsinnentemperatur liegt und die Innenraumtemperatur außerhalb einer vorbestimmten Referenzinnenraumtemperatur liegt, betreibt, wobei
ein Bereich der Referenzinnenraumtemperatur innerhalb eines Bereichs der Referenzvorrichtungsinnentemperatur liegt.

2. Informationsverarbeitungssystem (80) nach Anspruch 1, wobei der Prozessor so konfiguriert ist, dass er:
die Klimatisierungsvorrichtung in einem Fall, in dem die Vorrichtungsinnentemperatur innerhalb der Referenzvorrichtungsinnentemperatur liegt und die Innenraumtemperatur innerhalb der Referenzinnenraumtemperatur liegt, stoppt.

3. Informationsverarbeitungssystem (80) nach einem der Ansprüche 1 bis 2, wobei der Prozessor so konfiguriert ist, dass er:
die Vorrichtungsinnentemperatur von jedem von mehreren Vorrichtungsinnentemperatursensoren, die eine Temperatur in mindestens einer Bilderzeugungsvorrichtung (12) detektieren, erfasst; und
die Klimatisierungsvorrichtung in einem Fall, in dem mindestens eine von mehreren Vorrichtungsinnentemperaturen außerhalb der Referenzvorrichtungsinnentemperatur liegt, betreibt.

4. Informationsverarbeitungssystem (80) nach Anspruch 3,
wobei die Referenzvorrichtungsinnentemperatur für jeden der mehreren Vorrichtungsinnentemperatursensoren vorbestimmt ist.

5. Informationsverarbeitungssystem (80) nach Anspruch 3 oder 4,
wobei die Temperatur in der einen Bilderzeugungsvorrichtung (12) durch die mehreren Vorrichtungsinnentemperatursensoren detektiert wird.

6. Informationsverarbeitungssystem (80) nach Anspruch 3 oder 4,
wobei die Temperaturen in mehreren Bilderzeugungsvorrichtungen (12) entsprechend durch die Vorrichtungsinnentemperatursensoren detektiert werden.

7. Informationsverarbeitungssystem nach einem der Ansprüche 1 bis 6, wobei der Prozessor so konfiguriert ist, dass er:
in einem Fall, in dem die Vorrichtungsinnentemperatur die Referenzvorrichtungsinnentemperatur überschreitet, die Klimatisierungsvorrichtung in einem Kühlbetrieb betreibt.

8. Informationsverarbeitungssystem (80) nach einem der Ansprüche 1 bis 7, wobei der Prozessor so konfiguriert ist, dass er:
die Vorrichtungsinnentemperatur in einem Fall, in dem die Bilderzeugungsvorrichtung (12) arbeitet, erfasst; und
in einem Fall, in dem die Vorrichtungsinnentemperatur außerhalb der Referenzvorrichtungsinnentemperatur liegt, die Klimatisierungsvorrichtung betreibt, während die Bilderzeugungsvorrichtung (12) arbeitet.

9. Informationsverarbeitungsprogramm, das, wenn es von einem Prozessor (82A) bei dem Informationsverarbeitungssystem (80) nach Anspruch 1 ausgeführt wird, den Prozessor (82A) veranlasst, einen Prozess auszuführen, der umfasst:
Erfassen einer Vorrichtungsinnentemperatur in einer Bilderzeugungsvorrichtung (12); und
Betreiben einer Klimatisierungsvorrichtung (60), die einen Raum (R), in dem die Bilderzeugungsvorrichtung (12) installiert ist, klimatisiert, in einem Fall, in dem die Vorrichtungsinnentemperatur außerhalb einer vorbestimmten Referenzvorrichtungsinnentemperatur liegt; **dadurch gekennzeichnet, dass** der Prozessor (82A) ferner veranlasst wird, auszuführen:
Erfassen einer Innenraumtemperatur des Raums (R); und
Betreiben der Klimatisierungsvorrichtung (60) in einem Fall, in dem die Vorrichtungsinnentemperatur innerhalb der Referenzvorrichtungsinnentemperatur liegt und die Innenraumtemperatur außerhalb einer vorbestimmten Referenzinnenraumtemperatur liegt, wobei
ein Bereich der Referenzinnenraumtemperatur innerhalb eines Bereichs der Referenzvorrichtungsinnentemperatur liegt.

10. Informationsverarbeitungsverfahren, umfassend:
Erfassen einer Vorrichtungsinnentemperatur in einer Bilderzeugungsvorrichtung (12); und
Betreiben einer Klimatisierungsvorrichtung (60), die einen Raum (R), in dem die Bilderzeugungsvorrichtung (12) installiert ist, klimatisiert, in einem Fall, in dem die Vorrichtungsinnentemperatur außerhalb einer vorbestimmten Referenzvorrichtungsinnentemperatur liegt; **dadurch gekennzeichnet, dass** das Verfahren ferner umfasst:
Erfassen einer Innenraumtemperatur des Raums (R); und
Betreiben der Klimatisierungsvorrichtung (60) in einem Fall, in dem die Vorrichtungsinnentemperatur innerhalb der Referenzvorrichtungsinnentemperatur liegt und die Innenraumtemperatur außerhalb einer vorbestimmten Referenzinnenraumtemperatur liegt, wobei
ein Bereich der Referenzinnenraumtemperatur innerhalb eines Bereichs der Referenzvorrichtungsinnentemperatur liegt.

## Revendications

1. Système de traitement d'informations (80) comprenant :
au moins un processeur (82A),
dans lequel le processeur (82A) est configuré pour :
acquérir une température interne de dispositif dans un dispositif de formation d'images (12) ;
faire fonctionner un dispositif de climatisation (60) qui climatise l'air d'une pièce (R) dans laquelle le dispositif de formation d'images (12) est installé, dans un cas où la température interne de dispositif se situe en dehors d'une température interne de dispositif de référence prédéterminée, dans lequel le système de traitement d'informations (80) est **caractérisé en ce que** le processeur (82A) est en outre configuré pour :
acquérir une température intérieure de la pièce (R) ; et
faire fonctionner le dispositif de climatisation (60) dans un cas où la température interne de dispositif se situe dans la température interne de dispositif de référence et où la température intérieure se situe en dehors d'une température intérieure de référence prédéterminée, dans lequel
une plage de la température intérieure de référence se situe dans une plage de la température interne de dispositif de référence.

2. Système de traitement d'informations (80) selon la revendication 1, dans lequel le processeur est configuré pour :
arrêter le dispositif de climatisation dans un cas où la température interne de dispositif se situe dans la température interne de dispositif de référence et où la température intérieure se situe dans la température intérieure de référence.

3. Système de traitement d'informations (80) selon l'une quelconque des revendications 1 à 2, dans lequel le processeur est configuré pour :
acquérir la température interne de dispositif à partir de chacun d'une pluralité de capteurs de température interne de dispositif qui détectent une température dans au moins un dispositif de formation d'images (12) ; et
faire fonctionner le dispositif de climatisation dans un cas où au moins l'une d'une pluralité de températures internes de dispositif se situe en dehors de la température interne de dispositif de référence.

4. Système de traitement d'informations (80) selon la revendication 3,
dans lequel la température interne de dispositif de référence est prédéterminée pour chacun de la pluralité de capteurs de température interne de dispositif.

5. Système de traitement d'informations (80) selon la revendication 3 ou la revendication 4,
dans lequel la température dans ledit un dispositif de formation d'images (12) est détectée par la pluralité de capteurs de température interne de dispositif.

6. Système de traitement d'informations (80) selon la revendication 3 ou la revendication 4,
dans lequel les températures dans une pluralité de dispositifs de formation d'images (12) sont détectées par les capteurs de température interne de dispositif, respectivement.

7. Système de traitement d'informations selon l'une quelconque des revendications 1 à 6, dans lequel le processeur est configuré pour :
faire fonctionner le dispositif de climatisation dans une opération de refroidissement, dans un cas où la température interne de dispositif dépasse la température interne de dispositif de référence.

8. Système de traitement d'informations (80) selon l'une quelconque des revendications 1 à 7, dans lequel le processeur est configuré pour :
acquérir la température interne de dispositif dans un cas où le dispositif de formation d'images (12) est en fonctionnement ; et
faire fonctionner le dispositif de climatisation pendant que le dispositif de formation d'images (12) est en fonctionnement, dans un cas où la température interne de dispositif se situe en dehors de la température interne de dispositif de référence.

9. Programme de traitement d'informations, qui, lorsqu'il est exécuté par un processeur (82A) dans le système de traitement d'informations (80) selon la revendication 1, amène le processeur (82A) à exécuter un processus comprenant :
acquérir une température interne de dispositif dans un dispositif de formation d'images (12) ; et
faire fonctionner un dispositif de climatisation (60) qui climatise l'air d'une pièce (R) dans laquelle le dispositif de formation d'images (12) est installé, dans un cas où la température interne de dispositif se situe en dehors d'une température interne de dispositif de référence prédéterminée ; **caractérisé en ce que** le processeur (82A) est en outre amené à exécuter :
acquérir une température intérieure de la pièce (R) ; et
faire fonctionner le dispositif de climatisation (60) dans un cas où la température interne de dispositif se situe dans la température interne de dispositif de référence et où la température intérieure se situe en dehors d'une température intérieure de référence prédéterminée, dans lequel
une plage de la température intérieure de référence se situe dans une plage de la température interne de dispositif de référence.

10. Procédé de traitement d'informations comprenant :
acquérir une température interne de dispositif dans un dispositif de formation d'images (12) ; et
faire fonctionner un dispositif de climatisation (60) qui climatise l'air d'une pièce (R) dans laquelle le dispositif de formation d'images (12) est installé, dans un cas où la température interne de dispositif se situe en dehors d'une température interne de dispositif de référence prédéterminée ; **caractérisé en ce que** le procédé comprend en outre :
acquérir une température intérieure de la pièce (R) ; et
faire fonctionner le dispositif de climatisation (60) dans un cas où la température interne de dispositif se situe dans la température interne de dispositif de référence et où la température intérieure se situe en dehors d'une température intérieure de référence prédéterminée, dans lequel
une plage de la température intérieure de référence se situe dans une plage de la température interne de dispositif de référence.
